# EUROPÄISCHE PATENTSCHRIFT

(11) **EP 1 849 635 B1**
(45) Veröffentlichungstag und Bekanntmachung des Hinweises auf die Patenterteilung: **07.10.2009**
(21) Anmeldenummer: 07008540.2
(22) Anmeldetag: 26.04.2007
(51) Int. Cl.: B60J 1/20

(54) **Fensterrollo, welches an der Innenseite eines Kraftfahrzeugfensters anzuordnen ist**
Window blind to be attached to the inside of a motor vehicle window
Store de fenêtre à installer sur la partie intérieure de la fenêtre d'un véhicule automobile

(30) Priorität: 26.04.2006 DE 102006019455
(43) Veröffentlichungstag der Anmeldung: 31.10.2007
(73) Patentinhaber: HS Products Engineering GmbH, 82239 Alling (DE)
(72) Erfinder: Ziegenbein, Werner, 81929 München (DE)
(74) Vertreter: Eisenführ, Speiser & Partner

(56) Entgegenhaltungen:
- EP-A- 1 433 637
- EP-A1- 0 394 124
- DE-A1- 4 029 011
- DE-A1- 10 151 872
- DE-A1- 10 354 233
- DE-U1- 29 921 860
- DE-U1-202004 014 652
- FR-A1- 2 733 274

## Beschreibung

Die Erfindung betrifft ein Fensterrollo, welches an der Innenseite eines Kraftfahrzeugfensters anzuordnen ist, nach dem Oberbegriff des Patentanspruches 1.

Ein aus DE 299 21 860 U bekanntes Fensterrollo beinhaltet einen Zugstab, der mit einem ausziehbaren Ende einer auf einer Wickelwelle aufrollbaren Rollobahn verbunden ist sowie einen einen Elektromotor aufweisenden Linearantrieb, mit welchem der Zugstab zum Bewegen der Rollobahn angetrieben wird. Die Antriebsbewegung des als Elektromotor ausgebildeten Antriebsmotors auf den Zugstab erfolgt mit Hilfe eines Bürstenkabels.

Bei dem gattungsbildenden Fensterrollo das DE 103 54 233 A1wird das Antriebsmoment des Elektromotors über ein biegbares Zugelement mit zylindrischem Kern und wendelförmig den Kern umgebender Rippe, welches wie ein Bürstenkabel wirkt, auf einen Schlitten oder Gleitstein übertragen, der entsprechend verschoben wird. Bei den bekannten Vorrichtungen ist der Zugstab an einem separaten Gleitstein oder Schlitten gegebenenfalls schwenkbar angeordnet. Der Gleitstein oder Schlitten ist mit dem vorderen Ende des Bürstenkabels für die Hin- und Herbewegung in einer linearen Führungsbahn verbunden.

Aufgabe der Erfindung ist es, ein Fensterrollo der eingangs genannten Art zu schaffen, welches einen kompakten Aufbau aufweist und bei welchem eine direkte Übertragung der Linearbewegung auf den Zugstab erreicht wird.

Diese Aufgabe wird erfindungsgemäß durch die Merkmale des Patentanspruches 1 gelöst.

Bei der Erfindung weist der Linearantrieb eine vom Antriebsmotor angetriebene starre Zahnstange auf, mit welcher der Zugstab verbunden ist. Die Verbindung des Zugstabes mit der Zahnstange erfolgt in einem Drehlager an der Zahnstange. Die lineare Zahnstangenbewegung wird somit unmittelbar auf den Zugstab übertragen.

In vorteilhafter Weise ist zwischen dem als Elektromotor ausgebildeten Antriebsmotor und der Zahnstange ein Untersetzungsgetriebe vorgesehen. Auf diese Weise wird die hohe Drehzahl des Antriebsmotors in eine geeignete Linearbewegung der Zahnstange und damit des Zugstabes umgesetzt.

Die Zahnstange wird bevorzugt entlang einer Fensterbegrenzungskante, insbesondere einer unteren Fensterbegrenzungskante geführt. Vorzugsweise kommt die Erfindung bei einem Fensterrollo für ein seitliches Dreieckfenster im Fahrzeug zur Anwendung. Hierzu wird die Zahnstange vorzugsweise entlang der unteren Fensterbegrenzungskante des Dreieckfensters geführt. Bei dieser Ausführungsform befindet sich im Ruhezustand, d.h. bei auf der Wickelwelle aufgerollter Rollobahn, die Zahnstange zumindest teilweise unter der unteren Begrenzungskante des benachbarten Seitenbegrenzungsfensters. Dabei kann die Zahnstange oberhalb, insbesondere schräg oberhalb vom Rollobahnwickel des benachbarten Seitenfensterrollos angeordnet sein. Die Zahnstange befindet sich hierzu zwischen dem Rollobahnwickel und der Innenraumverkleidung des Fahrzeugs. Die raumsparende Anordnung im Fahrzeug wird noch dadurch verbessert, dass die Motorausgangswelle parallel zur unteren Begrenzungskante des Fahrzeugfensters angeordnet ist und das Motorantriebsmoment über zwei starr miteinander verbundene Zahnräder auf die Zahnstange übertragen wird. Das Getriebe besitzt hierzu bei der Verbindung zwischen dem Zahnradpaar und der Motorausgangswelle vorzugsweise ein Stirnschraubradpaar oder einen Schneckenradsatz.

Anhand der Figuren wird an einem Ausführungsbeispiel die Erfindung noch näher erläutert.

Es zeigt
- Fig. 1: in perspektivischer Darstellung das Ausführungsbeispiel in einer Ansicht schräg von rechts ohne Führungsgehäuse für die Zahnstange in Ruheposition;
- Fig. 2: das Ausführungsbeispiel mit Führungsgehäuse für die Zahnstange in Ruheposition;
- Fig. 3: das Ausführungsbeispiel mit Positionierung des Zugstabes in ausgezogener Stellung der Rollobahn;
- Fig. 4: eine schnittbildliche Darstellung entlang der Schnittlinie A-A in Fig. 1; und
- Fig. 5: eine schnittbildliche Darstellung entlang der Schnittlinie B-B in Fig. 1.

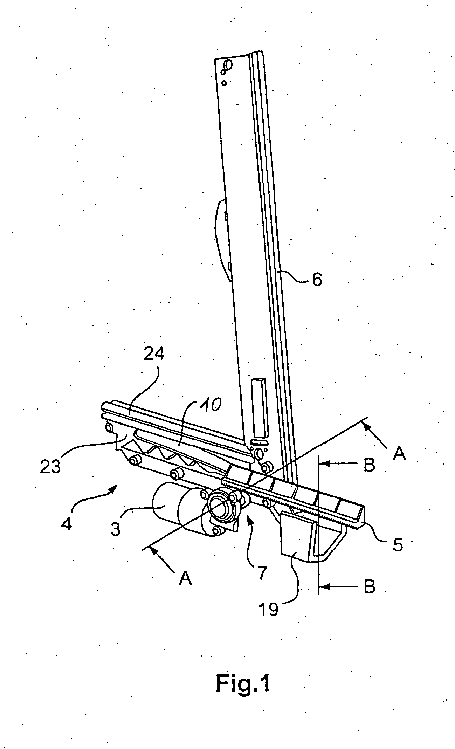

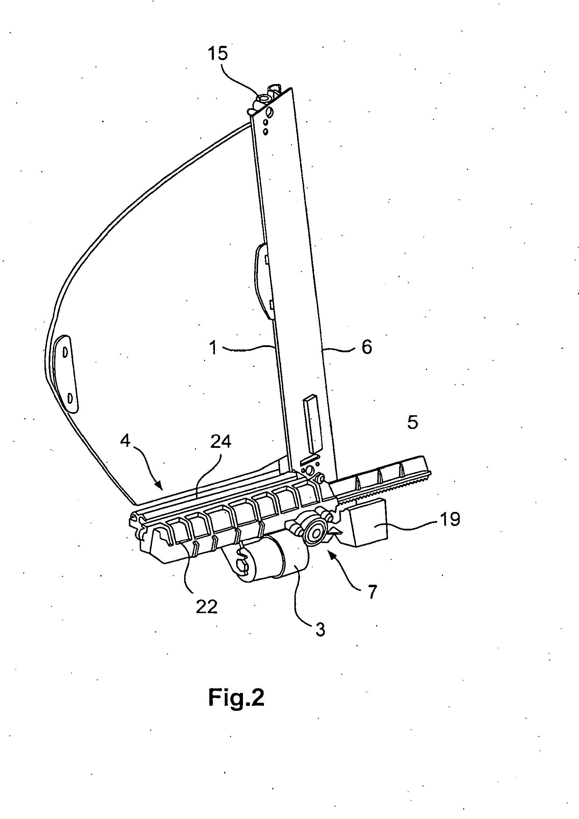

Beim dargestellten Ausführungsbeispiel ist an der Rückseite einer im wesentlichen vertikal im Fahrzeug angeordneten Montageplatte 6 eine Rollobahnkassette 15, deren oberes Ende in Fig. 2 sichtbar ist, befestigt. In den Fig. 1 und 2 ist die Ruheposition dargestellt, in welcher eine Rollobahn 2 auf einer ebenfalls im wesentlichen vertikal im Fahrzeug angeordneten Wickelwelle der Rollokassette 15 vollständig aufgewickelt ist.

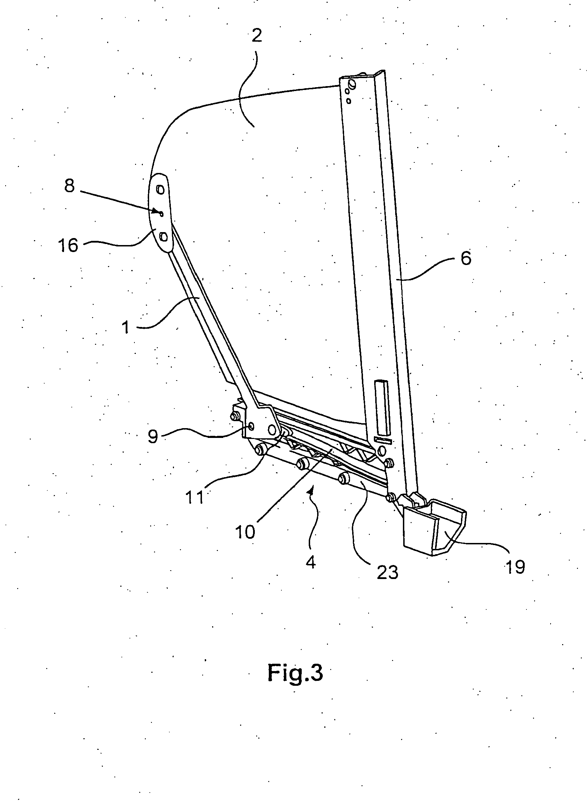

Zum seitlichen Ausziehen der Rollobahn 2 ist ein Zugstab 1 vorgesehen, welcher mit dem ausziehbaren Ende der Rollobahn 2 verbunden ist. In der Fig. 3 ist die Position des Zugstabes 1 in der ausgezogenen Stellung der Rollobahn 2 dargestellt. Die Verbindung des Zugstabes 1 mit der Rollobahn 2 erfolgt in einem Drehlager 8 an einem starren Lagerteil 16 am ausziehbaren Ende der Rollobahn 2.

Der Zugstab 1 ist in einem Drehlager 9 schwenkbar an einer Zahnstange 5 gelagert. Um den Zugstab 1 aus der in den Fig. 1 und 2 dargestellten Ruheposition in die in der Fig. 3 dargestellten ausgezogene Position der Rollobahn 2 zu bringen, wird die Zahnstange 5 aus der in den Fig. 1 und 2 dargestellten Ruheposition nach links bewegt. Hierzu ist die Zahnstange 5 Bestandteil eines Linearantriebs 4, der einen vorzugsweise als Elektromotor ausgebildeten Antriebsmotor 3 und ein Untersetzungsgetriebe 7 aufweist.

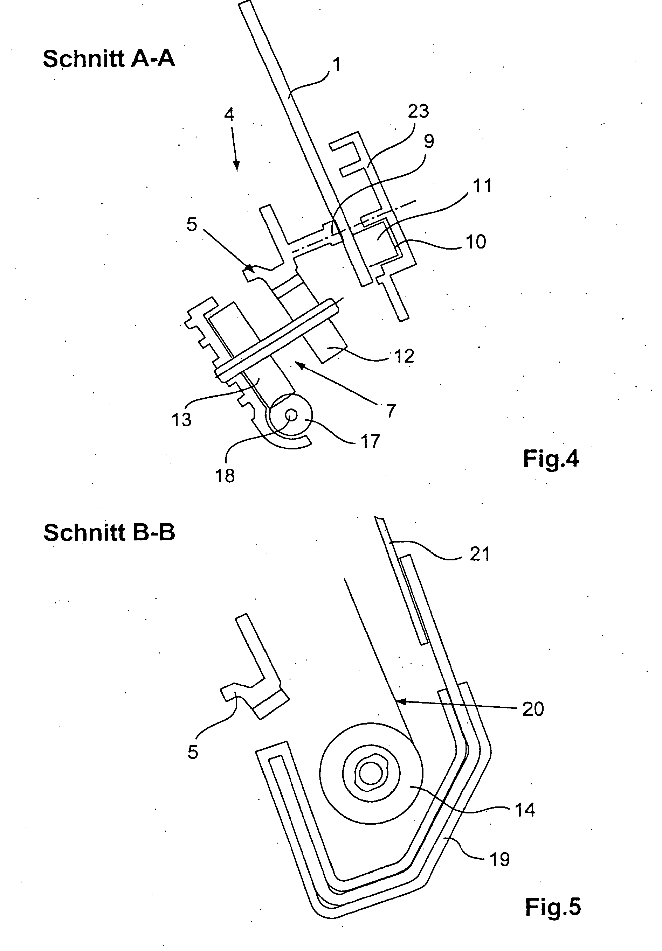

Das Untersetzungsgetriebe 7 enthält zwei starr miteinander verbundene Zahnräder 12 und 13 (Fig. 4) mit unterschiedlichen Durchmessern. Das Zahnrad 13 mit dem größeren Durchmesser kämmt mit einem Schneckenrad 17, welches fest auf einer Ausgangswelle 18 des Antriebsmotor 3 sitzt. Das Schneckenrad 17 und das Zahnrad 13 bilden einen Schneckenradsatz oder ein Stirnschraubradpaar. Das Zahnrad 12 mit dem geringeren Durchmesser als das Zahnrad 13 kämmt mit der Zahnstange 5. Die Anordnung der Antriebseinrichtung ist derart, dass die Ausgangswelle 18 des Antriebsmotors 3 etwa parallel zur Längsverschiebungsrichtung der Zahnstange 5 und einer nicht näher dargestellten unteren Begrenzungskante des Dreieckfensters, welches mit der Rollobahn 2 bedeckt werden kann, verläuft. Die gemeinsame Achse der beiden Zahnräder 12 und 13 verläuft senkrecht hierzu.

In der Ruheposition ragt ein Teil der Zahnstange 5 (in den Figuren der rechte Teil der Zahnstange 5) unter die untere Begrenzungskante des dem Dreieckfenster benachbarten Seitenfensters. In den Figuren ist hierzu ein linkes Kassettenende 19 der Rollokassette für die Rollobahn dieses Seitenfensters dargestellt. Wie insbesondere aus Fig. 5 zu ersehen ist, erstreckt sich der rechte Teil der Zahnstange 5 in der Ruheposition am Rollobahnwickel einer Seitenfensterrollobahn 20 vorbei. Die Zahnstange 5 und die Seitenfensterrollobahn 20 sind parallel zueinander ausgerichtet. Die Seitenfensterrollobahn 20 kann in der Ruheposition der Zahnstange 5 zwischen der Zahnstange 5 und einer Seitenfensterscheibe 21 nach oben ausgezogen werden, wie es in der Fig. 5 schematisch dargestellt ist. Die Zahnstange 5 befindet sich schräg oberhalb vom Rollobahnwickel 14 und unterhalb bzw. innerhalb der seitlichen Innenraumverkleidung des Fahrzeugs, beispielsweise der Türverkleidung und wird von der Innenraumverkleidung bedeckt.

In der Nähe des Drehlagers 9 ist an den Zugstab 1 ein Eingriffselement 11 angeformt, welches in eine Führungsbahn 10, die fahrzeugfest an der Montageplatte 6 befestigt ist, ragt. Die Führungsbahn 10 ist als Führungskulisse geformt, wie es aus den Fig. 1 und 3 zu ersehen ist. Beim Entlangführen des Eingriffselementes 11 in der Führungsbahn 10 wird der Zugstab 1 im Drehlager an der Zahnstange 5 in die jeweils gewünschte Schwenkposition geschwenkt. Die Führungsbahn kann in ein Montageformteil 23 beispielsweise aus Kunststoff eingeformt sein, das an der Montageplatte 6 befestigt ist. Das Montageformteil 23 erstreckt sich im wesentlichen längs der unteren Begrenzungskante des Dreieckfensters.

Zur exakten Führung der Zahnstange 5 kann mit dem Montageformteil 23 an welchem die Führungsbahn 10 vorgesehen ist, ein Führungsgehäuse 22 befestigt werden. An diesem Führungsgehäuse 22 kann auch der Antriebsmotor 3 und das dazugehörige Untersetzungsgetriebe 7, beispielsweise durch Schraubenverbindungen befestigt sein. Hierdurch wird eine einfache Montage und ein einfacher Zusammenbau des Fensterrollos erreicht.

Zwischen dem Führungsgehäuse und dem Montageformteil 23 mit der Führungsbahn 10 wird ein Führungsschlitz 24 gebildet, durch welchen der Zugstab 1 nach oben ragt.

### Bezugszeichenliste

- 1: Zugstab
- 2: Rollobahn
- 3: Antriebsmotor
- 4: Linearantrieb
- 5: Zahnstange
- 6: Montageplatte
- 7: Untersetzungsgetriebe
- 8: Drehlager
- 9: Drehlager
- 10: Führungsbahn
- 11: Eingriffselement
- 12: Zahnrad
- 13: Zahnrad
- 14: Rollobahnwickel
- 15: Rollobahnkassette
- 16: starres Lagerteil
- 17: Schneckenrad
- 18: Ausgangswelle
- 19: Kassettenende
- 20: Seitenfensterrollobahn
- 21: Seitenfensterscheibe
- 22: Führungsgehäuse
- 23: Montageformteil
- 24: Führungsschlitz

## Patentansprüche

1. Fensterrollo, welches an der Innenseite eines Kraftfahrzeugfensters anzuordnen ist, mit einem Zugstab (1), der mit einem ausziehbaren Ende einer auf einer Wickelwelle aufrollbaren Rollobahn (2) verbunden ist, und mit einem einen Antriebsmotor (3) aufweisenden Linearantrib (4), mit welchem der Zugstab (1) zum Bewegen der Rollobahn (2) angetrieben wird, **dadurch gekennzeichnet, dass** der Linearantrieb (4) eine starre Zahnstange (5) aufweist, die vom Antriebsmotor (3) zur Durchführung von Linearbewegungen angetrieben wird und dass der Zugstab (1) in einem an der Zahnstange (5) vorgesehenen Drehlager (9) gelagert ist und dass sich längs der linearen Bewegungsstrecke der Zahnstange (5) eine Führungsbahn (10) erstreckt, in welche der Zugstab eingreift, so dass der Zugstab (1) eine geführte Schwenkbewegung im an der Zahnstange (5) vorgesehenen Drehlager (9) bei der Zahnstangenbewegung ausführt.

2. Fensterrollo nach Anspruch 1, **dadurch gekennzeichnet, dass** die Zahnstange (5) entlang einer Fensterbegrenzungskante (6) geführt ist.

3. Fensterrollo nach Anspruch 1 oder 2, **dadurch gekennzeichnet, dass** die Zahnstange (5) über ein Untersetzungsgetriebe (7) von dem als Elektromotor ausgebildeten Antriebsmotor (3) angetrieben ist.

4. Fensterrollo nach einem der Ansprüche 1 bis 3, **dadurch gekennzeichnet, dass** der Zugstab (1) in einem Drehlager (8) mit dem ausziehbaren Ende der Rollobahn (2) verbunden ist.

5. Fensterrollo nach einem der Ansprüche 1 bis 4, **dadurch gekennzeichnet; dass** die Zahnstange (5) entlang einer unteren Begrenzungskante eines Dreiecksfensters geführt ist.

6. Fensterrollo nach Anspruch 5, **dadurch gekennzeichnet, dass** die Zahnstange (5) in der Ruheposition bei auf der Wickelwelle gewickelter Rollobahn (2) teilweise unter der unteren Begrenzungskante des benachbarten Fahrzeugseitenfensters angeordnet ist.

7. Fensterrollo nach Anspruch 5 oder 6, **dadurch gekennzeichnet, dass** im Ruhezustand die Zahnstange (5) zwischen einem Rollobahnwickel (14) des benachbarten Seitenfensters und der seitlichen Innenverkleidung des Fahrzeugs insbesondere der Türverkleidung angeordnet ist.

8. Fensterrollo nach einem der Ansprüche 1 bis 11, **dadurch gekennzeichnet, dass** eine Ausgangswelle (18) des Antriebsmotors (3) parallel zur linearen Führungsstrecke der Zahnstange (5) angeordnet ist und das Motorantriebsmoment über zwei starr miteinander verbundene Zahnräder (12, 13) des Untersetzungsgetriebes (7) auf die Zahnstange (5) übertragen ist.

9. Fensterrollo nach Anspruch 8, **dadurch gekennzeichnet, dass** die gemeinsame Achse der beiden Zahnräder (12, 13) senkrecht zur Ausgangswelle (18) des Antriebsmotors (3) und zur linearen Führungsstrecke der Zahnstange (5) verläuft.

10. Fensterrollo nach einem der Ansprüche 1 bis 9, **dadurch gekennzeichnet, dass** der Antriebsmotor (3) und das Untersetzungsgetriebe (7) an einem Führungsgehäuse (22) befestigt sind, in welchem die Zahnstange (5) geführt ist.

11. Fensterrollo nach einem der Ansprüche 1 bis 10, **dadurch gekennzeichnet, dass** eine Seitenfensterrollobahn (20) des zum Dreieckfenster benachbarten Seitenfensters zwischen der in Ruheposition befindlichen Zahnstange (5) und einer Seitenfensterscheibe (21) geführt ist.

## Claims

1. Window blind which is to be arranged at the inside of a vehicle window, comprising a tension rod (1) connected to an extractable end of a blind web (2) which is rollable onto a winding shaft, and a linear actuator (4) having a driving motor (3) and being used to drive said tension rod (1) for moving said blind web (2), **characterized in that** said linear actuator (4) comprises a rigid toothed rack (5) driven by said driving motor (3) for effecting linear movements, and that said tension rod (1) is supported in a pivot bearing (9) provided at said toothed rack (5), and that a guideway (10) extends along the linear trajectory of the toothed rack (5) and is engaged with said tension rod so that said tension rod (1) performs a guided pivoting in said pivot bearing (9) provided at said toothed rack (5) during the movement of said toothed rack.

2. Window blind according to claim 1, **characterized in that** said toothed rack (5) is guided along a window boundary edge (6).

3. Window blind according to claim 1 or 2, **characterized in that** said toothed rack (5) is driven by said driving motor (3) which is formed as an electric motor via a reduction gear (7).

4. Window blind according to any one of the claims 1 to 3, **characterized in that** said tension rod (1) is connected in a pivot bearing (8) to said extractable end of said blind web (2).

5. Window blind according to any one of the claims 1 to 4, **characterized in that** said toothed rack (5) is guided along a lower boundary edge of a triangle window.

6. Window blind according to claim 5, **characterized in that** said toothed rack (5) in its inoperative position, with the blind web (2) wound up on said winding shaft, is arranged in part below the lower boundary edge of the adjacent vehicle side window.

7. Window blind according to claim 5 or 6, **characterized in that** in the inoperative state the toothed rack (5) is arranged between a winding (14) of the blind web of the adjacent side window and a lateral interior lining, in particular a door lining, of the vehicle.

8. Window blind according to any one of the claims 1 to 7, **characterized in that** an output shaft (18) of the driving motor (3) is arranged parallel with the linear guideway of the toothed rack (5), and that the motor driving torque is being transmitted to the toothed rack (5) via two gears (12, 13) rigidly coupled to each other.

9. Window blind according to claim 8, **characterized in that** a shared axis of both gears (12, 13) extends perpendicular to the output shaft (18) of the driving motor (3) and perpendicular to the linear guideway of the toothed rack (5).

10. Window blind according to any one of the claims 1 to 9, **characterized in that** the driving motor (3) and the reduction gear (7) are mounted to a guiding body (22) in which the toothed rack (5) is being guided.

11. Window blind according to any one of the claims 1 to 10, **characterized in that** a side window blind web (20) of the side window adjacent to the triangle window is being guided between the toothed rack (5) arranged in the inoperative position and a side window pane (21).

## Revendications

1. Store enrouleur à monter sur le côté intérieur d'une fenêtre d'automobile, comprenant un bras de traction (1) relié à une extrémité extensible d'un panneau (2) enroulable sur un dérouleur et un mécanisme d'entraînement linéaire (4) comportant un moteur de commande (3) à l'aide duquel le bras de traction (1) est entraîné pour mouvoir le panneau du store, **caractérisé en ce que** le mécanisme d'entraînement linéaire (4) comprend une crémaillère (5) rigide commandée par le moteur de commande (3) pour effectuer des mouvements linéaires et **en ce que** le bras de traction (1) est logé dans un coussinet de pivotement (9) prévu sur la crémaillère (5) et **en ce qu'**une glissière (10) dans laquelle s'engrène le bras de traction (1) s'étend le long du trajet de mouvement linéaire de sorte que le bras de traction (1) effectue un mouvement pivotant guidé dans le coussinet de pivotement (9) prévu sur la crémaillère (5) lors du mouvement de la crémaillère.

2. Store enrouleur selon la revendication 1, **caractérisé en ce que** la crémaillère (5) est guidée le long d'un bord de délimitation (6) de la fenêtre.

3. Store enrouleur selon la revendication 1 ou 2, **caractérisé en ce que** la crémaillère (5) est entraînée par un moteur de commande (3) sous forme de moteur électrique par l'intermédiaire d'un démultiplicateur (7).

4. Store enrouleur selon l'une quelconque des revendications 1 à 3, **caractérisé en ce que** le bras de traction (1) est relié avec l'extrémité étirable du panneau du store (2) dans un coussinet de pivotement (8).

5. Store enrouleur selon l'une quelconque des revendications 1 à 4, **caractérisé en ce que** la crémaillère (5) est guidée le long d'un bord de délimitation inférieur d'une fenêtre triangulaire.

6. Store enrouleur selon la revendication 5, **caractérisé en ce que**, dans sa position de repos, la crémaillère (5) est disposée partiellement sous le bord de délimitation inférieur de la fenêtre d'automobile latérale adjacente lorsque le panneau (2) du store est enroulé sur le dérouleur.

7. Store enrouleur selon la revendication 5 ou 6, **caractérisé en ce que**, dans sa position de repos, la crémaillère (5) est disposée entre une partie enroulée du panneau du store de la fenêtre latérale adjacente et le revêtement intérieur latéral de l'automobile, notamment le revêtement de la porte.

8. Store enrouleur selon l'une quelconque des revendications 1 à 7, **caractérisé en ce qu'**un arbre de sortie (18) du moteur de commande (3) est disposé en parallèle par rapport au trajet de guidage linéaire de la crémaillère (5) et **en ce que** le couple d'entraînement du moteur est transmis à la crémaillère (5) par l'intermédiaire de deux roues dentées (12, 13) du démultiplicateur (7), rigidement liées entre elles.

9. Store enrouleur selon la revendication 8, **caractérisé en ce que** l'axe commun des deux roues dentées (12, 13) est disposé perpendiculairement à l'arbre de sortie (18) du moteur de commande (3) et par rapport au trajet de guidage linéaire de la crémaillère (5).

10. Store enrouleur selon l'une quelconque des revendications 1 à 9, **caractérisé en ce que** le moteur de commande (3) et le démultiplicateur (7) sont montés à un boîtier de guidage (22) dans lequel la crémaillère est guidée.

11. Store enrouleur selon l'une quelconque des revendications 1 à 10, **caractérisé en ce qu'**un panneau (20) du store de la fenêtre latérale à côté de la fenêtre triangulaire est guidé entre la crémaillère (5) en position de repos et une vitre (21) de la fenêtre latérale.
